# EUROPEAN PATENT SPECIFICATION

(11) **EP 2 793 289 B1**
(45) Date of publication and mention of the grant of the patent: **16.03.2016**
(21) Application number: 14160193.0
(22) Date of filing: 17.03.2014
(51) Int. Cl.: H01M 2/10

(54) **Battery module**
Batteriemodul
Module de batterie

(30) Priority: 29.03.2013 US 201361806745 P; 18.02.2014 US 201414183483
(43) Date of publication of application: 22.10.2014
(73) Proprietor: Samsung SDI Co., Ltd., Yongin-si, Gyeonggi-do (KR)
(72) Inventor: Jung, Hyun-Min, Yongin-si (KR)
(74) Representative: Gulde & Partner

(56) References cited:
- WO-A1-2008/098555
- US-A1- 2009 239 138
- US-A1- 2010 216 007

## Description

### BACKGROUND

### 1. Field

An aspect of the present invention relates to a battery module for absorbing a width tolerance.

### 2. Description of the Related Art

A high-power battery module using a non-aqueous electrolyte with high energy density has recently been developed. The high-power battery module is configured as a large-capacity battery module manufactured by connecting a plurality of battery cells in series so as to be used for driving devices, e.g., motors of electric vehicles and the like, which require high power.

The battery module includes a plurality of battery cells in consideration of output voltage and current. The battery module also includes a frame for firmly fixing the battery cells. In a case where there occurs a tolerance with which the width of the battery cells is greater or smaller than that of the frame, the battery cells cannot be firmly fixed by the frame.

### SUMMARY

Embodiments provide a housing for closely adhering to battery cells and a battery module in which a frame is adhered closely to battery cells even when there occurs a tolerance with which the width of the battery cells is greater or smaller than that of the frame, so that the battery cells can be firmly fixed by the frame.

According to the present invention, there is provided a battery module comprising: a plurality of battery cells and a housing for accommodating a plurality of battery cells. The housing comprises a pair of side plates, a bottom plate and at least one bending portion between a respective one of the side plates and the bottom plate wherein the at least one bending portion is configured to bias the side plate toward an interval between the pair of side plates. The battery module comprises the plurality of battery cells and a housing accommodating the battery cells. The housing of the battery module comprises a side plate, a bottom plate, and a bending portion between the side plate and the bottom plate, wherein the bending portion protrudes outwardly at least from the side plate.

The at least one bending portion may have a round shape.

When the length of the battery cell in the width direction is smaller than the interval between the pair of side plates, the round shape may be changed by a force applied in the side direction of the battery cell from the outside, and the side plate may be horizontally moved in the side direction of the battery cell.

When the length of the battery cell in the width direction is greater than the interval between the pair of side plates, the round shape may be changed by a force applied in the opposite direction to the side of the battery cell from the outside, and the side plate may be horizontally moved in the opposite direction to the side of the battery cell.

The bending portion may include a first extending portion extended from the bottom plate, and a second extending portion extended diagonally with respect to the side direction of the battery cell from the first extending portion.

When the length of the battery cell in the width direction is smaller than the interval between the pair of side plates, the angle formed between the first and second extending portions may be decreased by the force applied in the side direction of the battery cell from the outside, and the side plate may be horizontally moved in the side direction of the battery cell.

When the length of the battery cell in the width direction is greater than the interval between the pair of side plates, the angle formed between the first and second extending portions may be increased by the force applied in the side direction of the battery cell from the outside, and the side plate may be horizontally moved in the opposite direction to the side of the battery cell.

The side plate may be formed to extend in the direction parallel with the side of the battery cell from the second extending portion.

The bending portion may further include a cut-away groove formed between the first and second extending portions.

The battery module may further include a pair of end plates respectively coming in surface contact with the outermost battery cells among the battery cells, and a top cover covering tops of the battery cells.

One end of the side plate may be fastened to one end of the end plate through laser welding.

The side plate may include at least one first fastening portion fastened to the top cover, and the bottom plate may include at least one first fastening portion fastened to the end plate.

The top cover may include at least one first fastening portion fastened to the side plate, and at least one second fastening portion fastened to the end plate.

The end plate may include at least one first fastening portion fastened to the top cover, and at least one second fastening portion fastened to the bottom plate.

The first fastening portion of the side plate and the first fastening portion of the top cover, the second fastening portion of the top cover and the first fastening portion of the end plate, or the second fastening portion of the end plate and the first fastening portion of the bottom plate may be fastened to each other by the medium of a fastening member or through laser welding.

The fastening member may be a bolt-nut or stud.

The side plate may have at least one opening formed therein.

According to the present invention it is possible to a battery module capable of absorbing a width tolerance.

Accordingly, a frame can come in surface contact with battery cells, regardless of the size of the battery cells in the width direction, thereby firmly fixing the battery cells. Further advantageous embodiments are specified in the claims. Further advantageous embodiments are specified in the dependent claims.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view schematically showing a battery module according to an embodiment of the present invention.
FIG. 2 is an exploded perspective view of FIG. 1.
FIGS. 3A to 3C are enlarged sectional views showing region A of FIG. 1.
FIGS. 4A and 4B are partial enlarged sectional views showing a front lower portion of the battery module when no bending portion is formed.
FIGS. 5A to 5C are partial enlarged sectional views showing a front lower portion of a battery module according to another embodiment of the present invention.
FIG. 6 is a partial enlarged sectional view showing a front lower portion of a battery module according to still another embodiment of the present invention.

### DETAILED DESCRIPTION

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

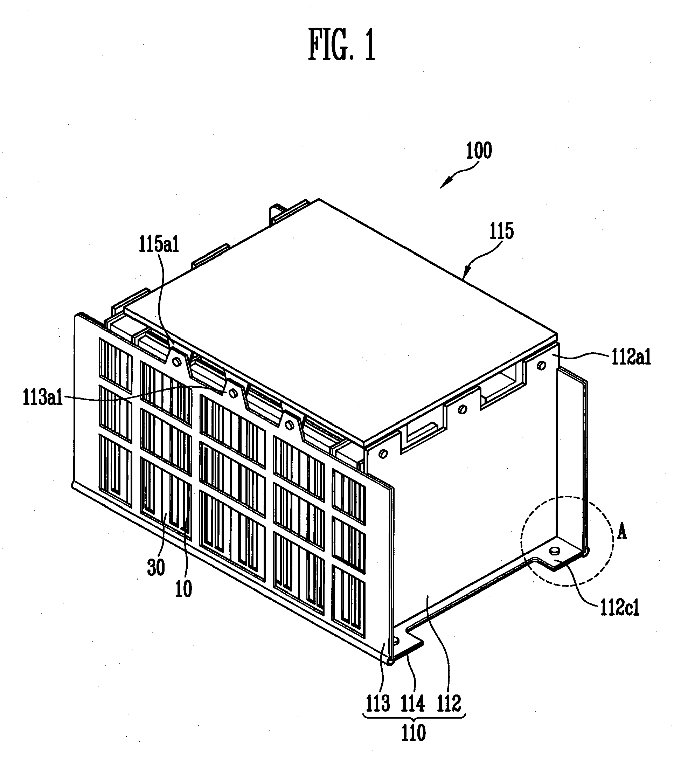

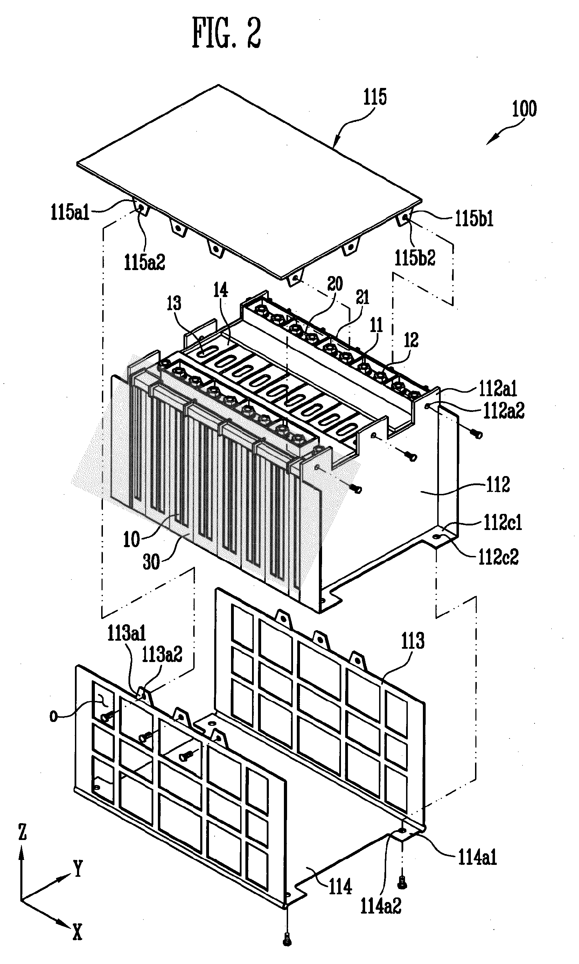

FIG. 1 is a perspective view schematically showing a battery module according to an embodiment of the present invention. FIG. 2 is an exploded perspective view of FIG. 1.

The battery module 100 according to this embodiment includes a plurality of battery cells 10 arranged in one direction and each having electrode terminals 11 and 12. In this case, the battery cells 10 are arranged so that wide surfaces of adjacent battery cells 10 face each other.

Each of the battery cells 10 constituting the battery module 100 may be manufactured by accommodating an electrode assembly and an electrolyte in a battery case and then sealing the battery case in which the electrode assembly is accommodated, using a cap plate 14. Here, the electrode assembly includes a positive electrode plate and a negative electrode plate and a separator interposed between these electrode plates. The cap plate 14 may be provided with electrode terminals protruded to the outside thereof. Here, the electrode terminals may be positive and negative electrode terminals 11 and 12 respectively connected to the positive and negative electrode plates. The positive and negative electrode plates may generate electrochemical energy by reacting with the electrolyte. In this case, the generated energy is transferred to the outside of the battery cell 10 through the positive and negative electrode terminals 11 and 12. A vent is provided in the cap plate 14 between the positive and negative electrode terminals 11 and 12, so as to serve as a passage through which gas is exhausted to the outside of the battery cell 10.

In this embodiment, a case where the battery cell 10 is a prismatic secondary battery will be described as an example. However, the present invention is not limited thereto and may be applied to various types of batteries including a lithium polymer battery, a cylindrical battery, and the like.

A housing member 110 according to this embodiment includes a pair of end plates 112 respectively coming in surface contact with the outermost battery cells 10 among the plurality of battery cells 10, a pair of side plates 113 disposed between the pair of end plates 112, and coming in surface contact with surfaces of the battery cells 10, and a bottom plate 114 facing bottoms of the battery cells 10. In this case, the bottom plate 114 may be extended in the vertical direction from the pair of side plates 113 so as to be integrally formed with the side plates 113.

The side plate 113 has at least one first fastening portion 113a1 fastened to a top cover 115, and a first fastening hole 113a2 is formed in the first fastening portion 113a of the side plate 113.

The bottom plate 114 has at least one fastening portion 114a1 fastened to the end plate 112, and a fastening hole 114a2 is formed in the fastening portion 114a1 of the bottom plate 114.

The top cover 115 has at least one first fastening portion 115a1 fastened to the side plate 113 and at least one second fastening portion 115b1 fastened to the end plate 112. First and second fastening holes 115a2 and 115b2 are respectively formed in the first and second fastening portions 115a1 and 115b1 of the top cover 115.

The end plate 112 has at least one first fastening portion 112a1 fastened to the top cover 115 and at least one second fastening portion 112c1 fastened to the bottom plate 114. First and second fastening holes 112a2 and 112c2 are respectively formed in the first and second fastening portions 112a1 and 112c1 of the end plate 112.

The first and second end plates 112 are disposed to come in surface contact with the respective outermost battery cells 10, thereby pressurizing the plurality of battery cells 10 to the inside thereof. The side plate 113 connects the first and second end plates 112 to each other. One end of the side plate 113 is fastened to the first end plate 112, and the other end of the side plate 113 is fastened to the second end plate 112. In this case, the first and second end plates 112 may be fasted to the side plate 113 through laser welding.

The side plates 113 provide a space in which the plurality of battery cells 10 can be aligned by connecting the first and second end plates 112 to each other, and simultaneously support both sides of the battery cells 10. Referring to FIG. 2, it has been described in this embodiment that the side plates 113 support both the sides of the battery cells 10 and have openings O for a coolant flow path, which are formed therein. However, the shape and the like of the side plate 113 may be freely modified according to the design of the battery module 100. The battery cells 10 are fixed in the space defined by the first and second end plates 112 and the side plates 113 so as not to be easily moved by an external impact.

A barrier 30 may be interposed between adjacent battery cells 10. A spacer (not shown) is provided in each barrier 30, so as to space apart the plurality of adjacent battery cells 10 from each other and to form a space between the battery cells 10. Accordingly, it is possible to provide the flow path of a coolant for cooling the battery cells 10.

The battery module 100 may further include a bus-bar 20 connecting the positive and negative electrodes 11 and 12 of the adjacent battery cells 10, and a shielding wall 21 surrounding adjacent bus-bars 20.

The shielding wall 21 may be provided to partition a plurality of bus-bars 20 electrically connecting the electrode terminals 11 and 12 of the adjacent battery cells 10. Thus, it is possible to prevent a short circuit between adjacent bus-bars 20 and to prevent a short circuit caused by an electric conductor made of metal such as a bolt-nut, which is a material used in the battery module 100.

In this embodiment, the fastening portion 113a1, 114a1, 115a1, 115b1, 112a1 or 112c1 and the fastening hole 113a2, 114a2, 115a2, 115b2, 112a2 or 112c2 may be fastened to each other by a fastening member such as a bolt-nut or stud. When necessary, the fastening portion and the fastening hole may be fastened to each other through welding.

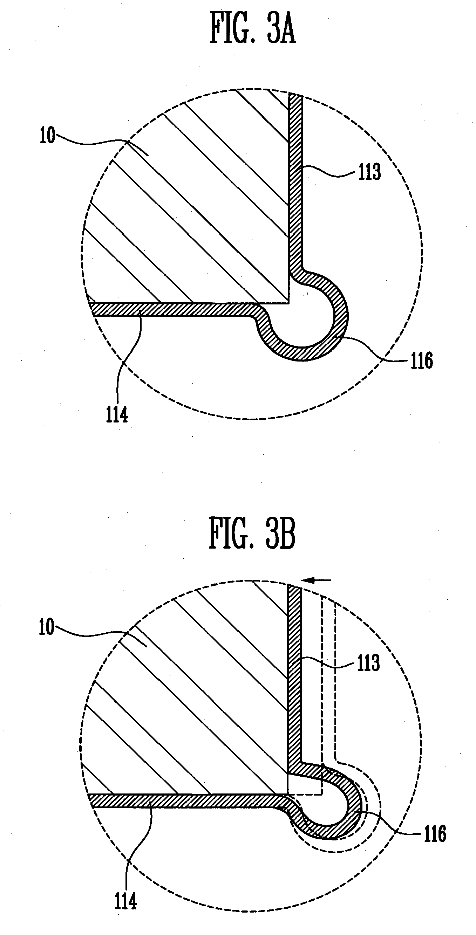

FIGS. 3A to 3C are enlarged sectional views showing region A of FIG. 1.

Referring to FIGS. 3A to 3C, a bending portion 116 is formed in a region where the side plate 113 and the bottom plate 114 are connected to each other. The bending portion 116 has a sectional shape protruded outward so that the side plate 113 can be moved in a side direction of the battery cell 10 or in the opposite direction thereto.

According to one embodiment, the sectional shape of the bending portion 116 may be a round shape.

For example, in a case where the length of the battery cell 10 in the width direction is smaller than the interval between the pair of side plates 113, the side plate 113 may be horizontally moved in a side direction of the battery cell 10 through a change in the bending portion 116 as shown in FIG. 3B. That is, the side plate 113 is moved in the side direction of the battery cell 10 by a force applied from the outside, thereby coming in surface contact with the side of the battery cell 10.

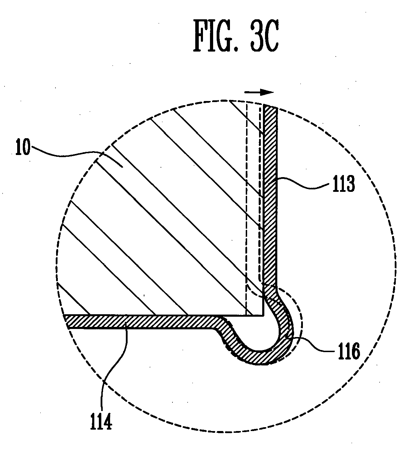

In a case where the length of the battery cell 10 in the width direction is greater than the interval between the pair of side plates 113, the side plate 113 may be moved in the opposite direction to the side direction of the battery cell 10 through a change in the bending portion 116 as shown in FIG. 3C. That is, the battery cell 10 is inserted into a space formed between the side plate 113 and the bottom plate 114 through the horizontal movement of the side plate 113, thereby assembling the battery pack. When the battery cell 10 is inserted into the space formed between the side plate 113 and the bottom plate 114, the side plate 113 comes in surface contact with the side of the battery cell 10.

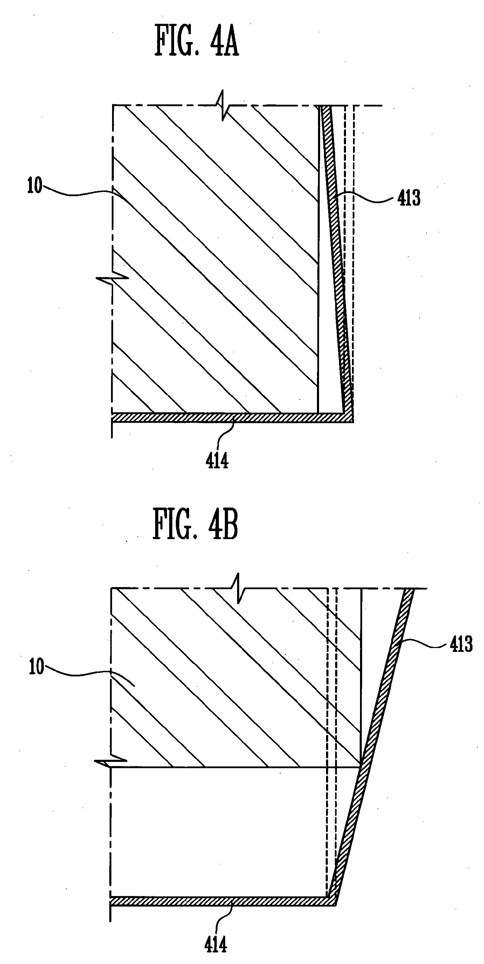

FIGS. 4A and 4B are partial enlarged sectional views showing a front lower portion of the battery module when no bending portion is formed.

In a case where no bending portion is formed, a side plate 413 may be formed to protrude in the vertical direction from a bottom plate 414.

In a case where the length of the battery cell 10 in the width direction is smaller than the interval between the pair of side plates 413, a void occurs between the side plate 413 and a side of the battery cell 10 as shown in FIG. 4A. Although the side plate 413 is moved in the side direction of the battery cell 10, there occurs a problem in that the side plate 413 cannot come in surface contact with the side of the battery cell 10.

In a case where the length of the battery cell 10 in the width direction is greater then the interval between the pair of side plates 413, there occurs a problem in that the battery cell 10 cannot be assembled in a space formed between the side plate 413 and the bottom plate 414 as shown in FIG. 4B.

To solve such problems, in the battery module according to this embodiment, the bending portion 116 is formed in the region where the side plate 113 and the bottom plate 114 are connected to each other as described in FIG. 3, so that the side of the battery cell 10 can come in surface contact with the side plate 113 even when the width direction of the battery cell 10 is not constant.

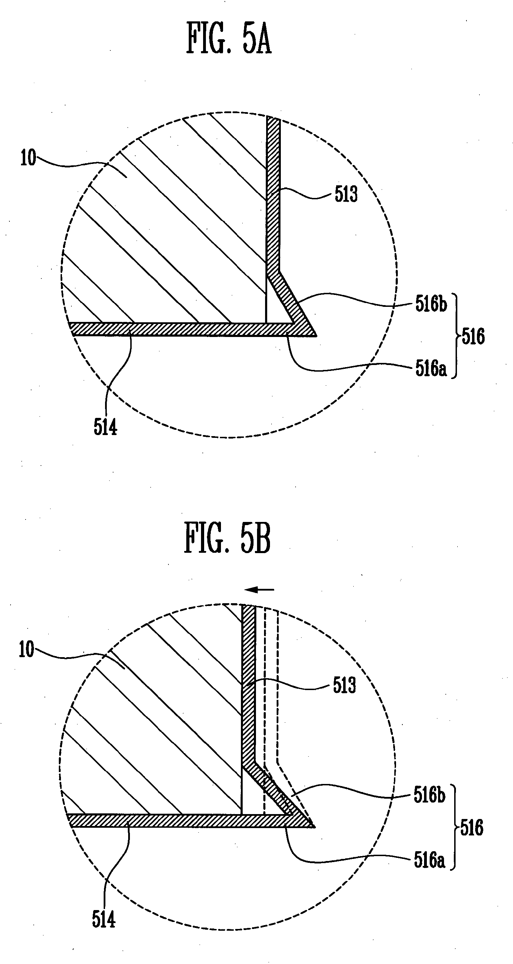

FIGS. 5A to 5C are partial enlarged sectional views showing a front lower portion of a battery module according to another embodiment of the present invention.

Referring to FIG. 5A, a bending portion 516 having a sectional shape convex to the outside of the battery module is formed in the region where a side plate 513 and a bottom plate 514 are connected to each other.

The bending portion 516 may include a first extending portion 516a extended from the bottom plate 514, and a second extending portion 516b extended diagonally with respect to the side direction of the battery cell 10 from the first extending portion 516a.

In this case, the side plates 513 may be formed to extend in the direction parallel with the side of the battery cell 10 from the second extending portion 516b.

Although it has been illustrated in FIG. 5A that the first extending portion 516a is formed to extend in the direction parallel with the bottom plate 514, the first extending portion 516a may be formed to extend while having an inclination of 90 degrees or less.

For example, in a case where the length of the battery cell 10 in the width direction is smaller than the interval between the pair of side plates 513, the angle formed between the first and second extending portions 516a and 516b may be decreased through a force applied in the side direction of the battery cell 10 from the outside as shown in FIG. 5B. Accordingly, the side plate 513 is horizontally moved in the side direction of the battery cell 10, so that the side plate 513 can come in surface contact with the side of the battery cell 10.

In a case where the length of the battery cell 10 in the width direction is greater than the interval between the pair of side plates 513, the angle formed between the first and second extending portions 516a and 516b can be increased through a force applied in the opposite direction to the side of the battery cell 10 from the outside as shown in 5C. In this case, the side plate 513 is horizontally moved in the opposite direction to the side of the battery cell 10. Thus, in a case where the length of the battery cell 10 in the width direction is greater than the interval between the pair of side plates 513, the battery cell 10 can be inserted into a space formed between the side plate 513 and the bottom plate 514, and the side plate 513 can come in surface contact with the side of the battery cell 10 in the insertion of the battery cell 10.

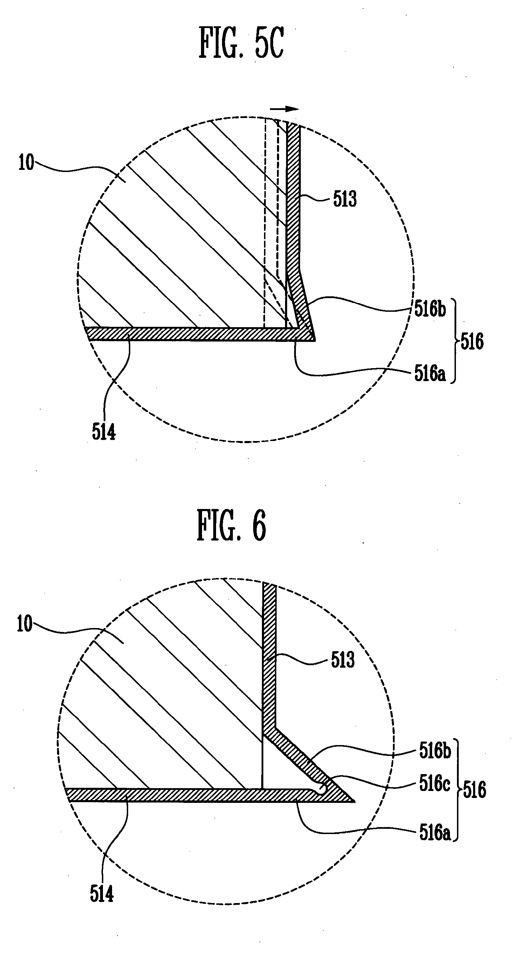

FIG. 6 is a partial enlarged sectional view showing a front lower portion of a battery module according to still another embodiment of the present invention.

Referring to FIG. 6, components in this embodiment except a bending portion 516 are identical to those in the embodiment shown in FIG. 5. Therefore, like components are designated by like reference numerals, and their detailed descriptions will be omitted.

As shown in FIG. 6, the bending portion 516 may include a first extending portion 516a extended from the bottom plate 514, a second extending portion 516b extended diagonally with respect to the side direction of the battery cell 10 from the first extending portion 516a, and a cut-away groove 516c formed between the first and second extending portions 516a and 516b.

Here, the cut-away groove 516c may perform a function of facilitating a change in the second extending portion 516b in the lateral direction.

As described above, the bending portion 116 or 516 enabling the side plate 113 or 513 to be moved is formed in the region where the side plate 113 or 513 and the bottom plate 114 or 514 are connected to each other, so that the side plate 113 or 513 can come in surface contact with the side of the battery cell 10 even when there occurs a tolerance between the length of the battery cell 10 in the width direction and the interval between the pair of side plates 113 or 513. That is, a frame can come in surface contact with the battery cell, regardless of the length of the battery cell in the width direction, so that the battery cells can be firmly fixed by the frame.

While the present invention has been described in connection with certain exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. A housing (110) for accommodating a plurality of battery cells (10), the housing (110) comprising a pair of side plates (113, 513), a bottom plate (114, 514), and at least one bending portion (116, 516) between a respective one of the side plates (113,513) and the bottom plate (114,514), wherein the at least one bending portion (116, 516) protrudes outwardly at least from the side plate (113).

2. A battery module (100) comprising:
a plurality of battery cells (10); and
a housing (110) accommodating the battery cells, the housing comprising a side plate (113), a bottom plate (114), and a bending portion (116) between the side plate and the bottom plate, wherein the bending portion (116) protrudes outwardly at least from the side plate (113).

3. The battery module (100) of claim 2 or the housing (110) of claim 1, wherein the bending portion (116) is rounded.

4. The battery module (100) of claim 2 or 3 or housing (110) of claim 1 or 3, wherein the bending portion (116) protrudes outwardly from both the side plate (113) and the bottom plate (114).

5. The battery module (100) of claim 2 or housing (110) of claim 1, wherein a part of the bending portion (516) protrudes outwardly from the side plate (513).

6. The battery module (100) of claim 2 or housing (110) of claim 1, wherein the bending portion (516) comprises a first extending portion (516a) extending the bottom plate (514) and a second extending portion (516b) protruding from the side plate (513) at an angle with respect to the side plate (513), the angle being different from 90 degree and different from 0 degree.

7. The battery module (100) or housing (110) of claim 5, wherein the bending portion further includes a groove (516c) between the first extending portion (516a) and the second extending portion (516b).

8. The housing (110) of one of claims 1 and 3 to 7, wherein the bending portion (116, 516) is flexible and configured to change shape depending on a force applied to the side plates (113, 513).

9. The housing (110) of one of claims 1 and 3 to 8, further comprising a top cover (115), wherein the top cover (115) has first fastening portions (115a1) having first fastening openings (115a2), wherein the side plates have corresponding first fastening portions (113a1) having first fastening openings (113a2) such that the top cover (115) can be fastened to each of the side plates (113).

10. The housing (110) of claim 9, further comprising a pair of end plates (112) each of the end plates being configured for being coupled to at least one of the bottom plate (114) and the top cover (115), wherein the bottom plate has a fastening portion (114a1) having a fastening opening (114a2) and wherein the bottom plate is coupled to each of the end plates (112).

11. The housing (110) of one of claims 1 and 3 to 10, wherein the side plate (113, 513), the bottom plate (114, 514), and the bending portion (116, 516) are integral as a single component.

12. The housing (110) of one of claims 1 and 3 to 11, wherein the bending portion (116, 516) extends along an entire length of the respective side plate (113, 513).

13. The housing (110) of one of claims 1 and 3 to 12, wherein the side plates (113,513) extend parallel to each other.

## Patentansprüche

1. Gehäuse (110) zur Aufnahme einer Vielzahl von Batteriezellen (10), wobei das Gehäuse (110) ein Paar Seitenplatten (113, 513), eine Bodenplatte (114, 514) und zumindest einen Biegeabschnitt (116, 516) zwischen einer jeweiligen der Seitenplatten (113, 513) und der Bodenplatte (114, 514) aufweist, wobei der zumindest eine Biegeabschnitt (116, 516) zumindest aus der Seitenplatte (113) nach außen vorragt.

2. Batteriemodul (100), aufweisend:
eine Vielzahl von Batteriezellen (10); und
ein Gehäuse (110), das die Batteriezellen aufnimmt, wobei das Gehäuse eine Seitenplatte (113), eine Bodenplatte (114) und einen Biegeabschnitt (116) zwischen der Seitenplatte und der Bodenplatte aufweist, wobei der Biegeabschnitt (116) zumindest aus der Seitenplatte (113) nach außen vorragt.

3. Batteriemodul (100) nach Anspruch 2 oder das Gehäuse (110) nach Anspruch 1, wobei der Biegeabschnitt (116) gerundet ist.

4. Batteriemodul (100) nach Anspruch 2 oder 3 oder Gehäuse (110) nach Anspruch 1 oder 3, wobei der Biegeabschnitt (116) sowohl aus der Seitenplatte (113) als auch der Bodenplatte (114) nach außen vorragt.

5. Batteriemodul (100) nach Anspruch 2 oder Gehäuse (110) nach Anspruch 1, wobei ein Teil des Biegeabschnitts (516) aus der Seitenplatte (513) nach außen vorragt.

6. Batteriemodul (100) nach Anspruch 2 oder Gehäuse (100) nach Anspruch 1, wobei der Biegeabschnitt (516) einen ersten Erstreckungsabschnitt (516a), der sich von der Bodenplatte (514) erstreckt, und einen zweiten Erstreckungsabschnitt (516b), der von der Seitenplatte (513) in einem Winkel bezüglich der Seitenplatte (513) vorragt, aufweist, wobei der Winkel anders als 90 Grad und anders als 0 Grad ist.

7. Batteriemodul (100) oder Gehäuse (110) nach Anspruch 5, wobei der Biegeabschnitt ferner eine Nut (516c) zwischen dem ersten Erstreckungsabschnitt (516a) und dem zweiten Erstreckungsabschnitt (516b) aufweist.

8. Gehäuse (110) nach einem der Ansprüche 1 und 3 bis 7, wobei der Biegeabschnitt (116, 516) flexibel ist und konfiguriert ist, um die Form in Abhängigkeit von einer Kraft, mit der die Seitenplatten (113, 513) beaufschlagt werden, zu ändern.

9. Gehäuse (110) nach einem der Ansprüche 1 und 3 bis 8, ferner aufweisend eine obere Abdeckung (115), wobei die obere Abdeckung (115) erste Befestigungsabschnitte (115a1), die erste Befestigungsöffnungen (115a2) aufweisen, aufweist, wobei die Seitenplatten entsprechende erste Befestigungsabschnitte (113a1) aufweisen, die erste Befestigungsöffnungen (113a2) aufweisen, so dass die obere Abdeckung (115) an jeder der Seitenplatten (113) befestigt werden kann.

10. Gehäuse (110) nach Anspruch 9, ferner aufweisend ein Paar Endplatten (112), wobei jede der Endplatten konfiguriert ist, um mit zumindest einer der Bodenplatte (114) und der oberen Abdeckung (115) verkoppelt zu werden, wobei die Bodenplatte einen Befestigungsabschnitt (114a1), der eine Befestigungsöffnung (114a2) aufweist, aufweist, und wobei die Bodenplatte mit jeder der Endplatten (112) verkoppelt ist.

11. Gehäuse (110) nach einem der Ansprüche 1 und 3 bis 10, wobei die Seitenplatte (113, 513), die Bodenplatte (114, 514) und die Biegeabschnitte (116, 516) einstückig als eine einzige Komponente ausgebildet sind.

12. Gehäuse (110) nach einem der Ansprüche 1 und 3 bis 11, wobei sich der Biegeabschnitt (116, 516) entlang einer Gesamtlänge der jeweiligen Seitenplatte (113, 513) erstreckt.

13. Gehäuse (110) nach einem der Ansprüche 1 und 3 bis 12, wobei sich die Seitenplatten (113, 513) parallel zueinander erstrecken.

## Revendications

1. Boîtier (110) destiné à recevoir une pluralité d'éléments de batterie (10), le boîtier (110) comprenant une paire de plaques latérales (113, 513), une plaque de fond (114, 514), et au moins une partie de flexion (116, 516) entre une plaque respective parmi les plaques latérales (113, 513) et la plaque de fond (114, 514), dans lequel l'au moins une partie de flexion (116, 516) fait saillie vers l'extérieur au moins à partir de la plaque latérale (113).

2. Module de batterie (100) comprenant :
une pluralité d'éléments de batterie (10) ; et
un boîtier (110) recevant les éléments de batterie, le boîtier comprenant une plaque latérale (113), une plaque de fond (114), et une partie de flexion (116) entre la plaque latérale et la plaque de fond, où la partie de flexion (116) fait saillie vers l'extérieur au moins à partir de la plaque latérale (113).

3. Module de batterie (100) de la revendication 2 ou boîtier (110) de la revendication 1, dans lequel la partie de flexion (116) est arrondie.

4. Module de batterie (100) de la revendication 2 ou 3 ou boîtier (110) de la revendication 1 ou 3, dans lequel la partie de flexion (116) fait saillie vers l'extérieur à la fois à partir de la plaque latérale (113) et de la plaque de fond (114).

5. Module de batterie (100) de la revendication 2 ou boîtier (110) de la revendication 1, dans lequel une partie de la partie de flexion (516) fait saillie vers l'extérieur à partir de la plaque latérale (513).

6. Module de batterie (100) de la revendication 2 ou boîtier (110) de la revendication 1, dans lequel la partie de flexion (516) comprend une première partie d'extension (516a) s'étendant à partir de la plaque de fond (514) et une deuxième partie d'extension (516b) faisant saillie à partir de la plaque latérale (513) selon un angle par rapport à la plaque latérale (513), l'angle étant différent de 90 degrés et différent de 0 degré.

7. Module de batterie (100) ou boîtier (110) de la revendication 5, dans lequel la partie de flexion comporte en outre une rainure (516c) entre la première partie d'extension (516a) et la deuxième partie d'extension (516b).

8. Boîtier (110) de l'une des revendications 1 et 3 à 7, dans lequel la partie de flexion (116, 516) est flexible et configurée pour changer de forme en fonction d'une force appliquée aux plaques latérales (113, 513).

9. Boîtier (110) de l'une des revendications 1 et 3 à 8, comprenant en outre un couvercle supérieur (115), dans lequel le couvercle supérieur (115) a des premières parties de fixation (115a1) ayant des premières ouvertures de fixation (115a2), où les plaques latérales ont des premières parties de fixation correspondantes (113a1) ayant des premières ouvertures de fixation (113a2) de sorte que le couvercle supérieur (115) puisse être fixé à chacune des plaques latérales (113).

10. Boîtier (110) de la revendication 9, comprenant en outre une paire de plaques d'extrémité (112) chacune des plaques d'extrémité étant configurée pour être couplée à au moins l'une parmi la plaque de fond (114) et le couvercle supérieur (115), où la plaque de fond a une partie de fixation (114a1) ayant une ouverture de fixation (114a2) et dans lequel la plaque de fond est couplée à chacune des plaques d'extrémité (112).

11. Boîtier (110) de l'une des revendications 1 et 3 à 10, dans lequel la plaque latérale (113, 513), la plaque de fond (114, 514), et la partie de flexion (116, 516) font partie intégrante en tant que composant unique.

12. Boîtier (110) de l'une des revendications 1 et 3 à 11, dans lequel la partie de flexion (116, 516) s'étend le long de toute la longueur de la plaque latérale respective (113, 513).

13. Boîtier (110) de l'une des revendications 1 et 3 à 12, dans lequel les plaques latérales (113, 513) s'étendent de manière parallèle les unes aux autres.
